# FASCICULE DE BREVET EUROPEEN

(11) **EP 3 220 207 B1**
(45) Date de publication et mention de la délivrance du brevet: **30.09.2020**
(21) Numéro de dépôt: 16160577.9
(22) Date de dépôt: 16.03.2016
(51) Int. Cl.: G04B 19/02, G04B 13/02, G04D 3/00, G04B 39/00, G04B 37/00

(54) **SYSTÈME D'AFFICHAGE POUR PIÈCE D'HORLOGERIE**
ANZEIGESYSTEM FÜR UHR
DISPLAY SYSTEM FOR A TIMEPIECE

(43) Date de publication de la demande: 20.09.2017
(73) Titulaire: GFPI S.A., 2301 La Chaux-de-Fonds (CH); CompliTime SA, 2301 La Chaux-de-Fonds (CH)
(72) Inventeur: FORSEY, Stephen, 2416 Les Brenets (CH); GREUBEL, Robert, 2400 Le Locle (CH)
(74) Mandataire: e-Patent SA

(56) Documents cités:
- EP-A1- 2 672 335
- EP-A1- 2 843 482
- GB-A- 1 544 768
- TOSHIYUKI HORIUCHI ET AL: "Fabrication of nickel micro-parts using liquid-crystal-display projection lithography and newly developed pattern transfer process", MICROELECTRONIC ENGINEERING., vol. 98, 1 octobre 2012 (2012-10-01), pages 574-577, XP055305251, NL ISSN: 0167-9317, DOI: 10.1016/j.mee.2012.06.017
- HORIUCHI T ET AL: "Micro-gear fabrication using optical projection lithography on copper-clad plastic substrates and electroplating of nickel", MICROELECTRONIC ENGINEERING, ELSEVIER PUBLISHERS BV., AMSTERDAM, NL, vol. 83, no. 4-9, 1 avril 2006 (2006-04-01), pages 1316-1320, XP024955057, ISSN: 0167-9317, DOI: 10.1016/J.MEE.2006.01.083 [extrait le 2006-04-01]
- BERTSCH A ET AL: "Combining microstereolithography and thick resist UV lithography for 3D microfabrication", MICRO ELECTRO MECHANICAL SYSTEMS, 1998. MEMS 98. PROCEEDINGS., THE ELE VENTH ANNUAL INTERNATIONAL WORKSHOP ON HEIDELBERG, GERMANY 25-29 JAN. 1998, NEW YORK, NY, USA,IEEE, US, 25 janvier 1998 (1998-01-25), pages 18-23, XP010270154, DOI: 10.1109/MEMSYS.1998.659722 ISBN: 978-0-7803-4412-9

## Description

### Domaine technique

La présente invention concerne le domaine de l'horlogerie. Plus particulièrement, elle concerne un système d'affichage pour pièce d'horlogerie.

### Etat de la technique

La tendance dans l'horlogerie compliquée est de multiplier le nombre de mécanismes dans une pièce d'horlogerie, et ainsi de multiplier le nombre d'affichages y associés. Plusieurs fabricants ont réussi à mettre un nombre important d'affichages sur le cadran d'une montre, mais à un certain niveau de complication il devient difficile, voire impossible, d'incorporer l'affichage de chaque complication sur le cadran et de maintenir sa lisibilité. Afin de résoudre ce problème, il est connu de disposer un ou plusieurs des affichages côté fond de la pièce, comme par exemple dans la pièce "GMT" de Greubel Forsey, ou visible latéralement au travers d'une ouverture pratiquée dans la carrure. Un exemple de ce dernier est l'affichage de la réserve de marche dans la pièce "Tourbillon Orbital" de Jean Dunand. Il va sans dire que des affichages visibles côté fond nécessitent que la pièce soit enlevée du poignet du porteur afin de les consulter.

Ces solutions présentent sans doute des possibilités de multiplier le nombre d'affichages dans une seule pièce, mais chaque complication ajoutée entraîne une consommation d'énergie supplémentaire importante. Par conséquent, les montres compliquées sont typiquement grandes, et comportent un ou même plusieurs barillets puissants afin de fournir suffisamment de couple aux mécanismes tout en gardant une durée de marche acceptable pour l'utilisateur.

On note par ailleurs que des roues horlogères à très petites dentures sont connues notamment dans le document GB1544768, qui décrit une roue des secondes ayant 60 dents présentant un module entre 0,025mm et 0,05mm, et dans le document EP2672335, qui décrit une roue à rattrapage de jeu qui engrène avec un pignon présentant un module de 0,052mm.

### Divulgation de l'invention

L'objet de l'invention est donc de surmonter les inconvénients mentionnés ci-dessus, et ainsi de permettre la construction d'une pièce d'horlogerie comportant des affichages supplémentaires à consommation d'énergie réduite, permettant donc une amélioration de la durée de marche de la pièce et/ou une multiplication du nombre d'affichages possibles.

À cet effet, l'invention concerne un système d'affichage pour pièce d'horlogerie comme définit dans la revendication 1. Ce système comprend un mobile agencé pour être entraîné par une source motrice, tel qu'un barillet, un moteur électrique, une sortie d'un dispositif de réserve de marche ou d'un dispositif d'affichage des marées, de la phase de lune ou similaire, par l'intermédiaire d'une première denture que comporte ledit mobile.

Le mobile comporte au moins une deuxième denture présentant un module de denture inférieure à 0,05 mm, ladite deuxième denture étant agencée pour entraîner directement ou indirectement un organe d'affichage. Cet organe d'affichage peut être par exemple une aiguille, un disque, des marquages sur une roue, ou n'importe quelle autre forme d'organe d'affichage.

Ce module permet une diminution importante de la taille des composants, et donc une réduction de leur inertie ainsi que du couple nécessaire pour les entraîner. Une diminution de la taille de la pièce et/ou une multiplication du nombre d'affichages supplémentaires est donc possible.

Selon l'invention, ledit mobile est un mobile d'échappement. La deuxième denture étant très petite et donc légère, il est possible d'afficher ainsi des fractions d'une seconde par l'intermédiaire d'un organe d'affichage qui est entraîné en permanence mais qui n'engendre pas une consommation d'énergie ni un besoin de couple additionnel excessif. Typiquement, des tels affichages se limitent à une application dans un mécanisme de chronographe (une "foudroyante"), dans lequel cas l'organe d'affichage est débrayé du rouage de chronographe lorsque ce dernier est en marche, afin d'éviter des pertes d'énergie importantes. Le système de l'invention évite donc cette nécessité de débrayer l'organe d'affichage, et permet une indication des fractions d'une seconde non seulement dans le contexte d'une foudroyante de chronographe, mais aussi dans le contexte d'une liaison cinématique permanente avec le rouage de finissage du mouvement de base. Par ailleurs, une foudroyante peut ainsi être implémentée avec un nombre réduit de composants et d'engrenages par rapport à un mécanisme de foudroyante connu.

Ladite deuxième denture peut être droite, à chant, conique, ou présenter une forme combinée.

Avantageusement, ledit mobile comporte une troisième denture présentant également un module de denture inférieure à 0,05 mm, l'organe d'affichage étant entraîné par l'intermédiaire d'une paire de pignons liés entre eux par un élément élastique, l'un de ces pignons engrenant avec ladite deuxième denture, l'autre avec ladite troisième denture, l'élément élastique étant précontraint, par exemple en déphasant les deux pignons afin de tendre l'élément élastique dans un sens ou dans l'autre. Cet agencement rattrape le jeu d'engrenage et évite donc tout chevrotement de l'organe d'affichage par l'intermédiaire d'un agencement qui convient à une utilisation en combinaison avec des dentures d'une telle petite taille.

Avantageusement, ladite deuxième denture est venue d'une pièce avec ladite troisième denture, ce qui permet une construction monobloc facilitant le montage en une fois de ces dentures sur le mobile.

Avantageusement, au moins ladite deuxième denture est construite par fabrication additive.

Avantageusement, le système de l'invention peut être incorporé dans une pièce d'horlogerie qui comporte un dispositif optique pour pouvoir visualiser ledit organe d'affichage.

Avantageusement, la pièce d'horlogerie comporte une pluralité desdits systèmes, ledit dispositif optique étant agencé pour être déplaçable par rapport à une carrure que comporte ladite pièce d'horlogerie afin de visualiser l'organe d'affichage d'au moins deux desdits systèmes, notamment les organes d'affichage correspondants. Un seul dispositif optique peut donc être utilisé pour lire les diverses indications, sans devoir disposer les organes d'affichage immédiatement adjacents les uns aux autres.

À cet effet, le dispositif optique peut être monté dans une bague rotative prévue dans ladite carrure, dans un coulisseau monté dans une coulisse prévue dans ladite carrure, dans une lunette tournante montée sur ladite carrure, ou bien dans un fond ou une partie de fond tournant(e) monté(e) sur ladite carrure.

Alternativement, le système de l'invention peut se situer dans un module amovible agencé pour prendre place au moins partiellement dans un logement prévu dans la pièce d'horlogerie, notamment dans sa carrure. Ceci présente quelques avantages. En premier lieu, l'utilisateur peut sortir le système de la pièce d'horlogerie pour l'examiner. Par ailleurs, une pluralité de modules de fonctionnalités et/ou d'aspects esthétiques différents peut être utilisée avec la même pièce d'horlogerie.

Dans cette approche modulaire, ladite source motrice peut faire partie d'un mouvement que comporte la pièce d'horlogerie tandis que ledit mobile se situe dans ledit module amovible, ladite source motrice étant en liaison cinématique avec ledit mobile lorsque ledit module amovible se trouve dans ledit logement. Alternativement, la source motrice peut être intégrée audit module amovible, et donc le système peut être indépendant du mouvement de la pièce d'horlogerie. Cette dernière alternative évite de devoir faire passer la prise de force au travers du boîtier de la pièce, et présente donc des avantages au niveau de l'étanchéité.

L'invention concerne également un procédé de fabrication d'un système d'affichage comme définit ci-dessus, dans lequel au moins ladite deuxième denture est obtenue par l'intermédiaire d'un procédé de fabrication additive. Ceci permet la construction de dentures de n'importe quelle forme tridimensionnelle ayant les modules de denture nécessaires pour la mise en œuvre de l'invention.

### Brève description des dessins

D'autres détails de l'invention apparaîtront plus clairement à la lecture de la description qui suit, faite en référence aux dessins annexés dans lesquels :
- Fig. 1 est une vue en perspective d'un système d'affichage selon l'invention ;
- Fig. 2 est une vue en perspective d'une roue faisant partie du système de la figure 1 ;
- Fig. 3 est une vue d'un jeu de pignons faisant partie du mode de réalisation de la figure 1 ;
- Fig. 4 est une vue schématique en plan d'une variante d'une pièce d'horlogerie comportant deux systèmes selon l'invention ; et
- Fig. 5 est une vue schématique en plan d'une autre variante d'une pièce d'horlogerie comportant plusieurs systèmes selon l'invention.

### Mode(s) de réalisation de l'invention

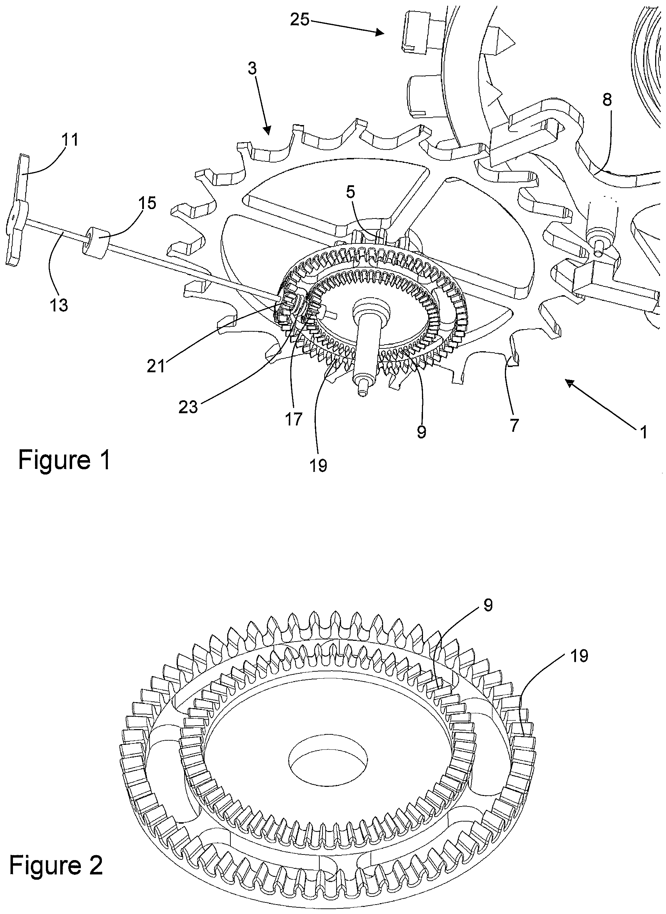

La figure 1 illustre un système d'affichage 1 selon l'invention dans le contexte d'une foudroyante. Néanmoins, le principe de l'invention s'applique plus largement, par exemple à des affichages de chronographe, de quantième, de réserve de marche, de la phase de lune, des marées, le temps dans un autre fuseau horaire, des animations, etc.

Le système 1 selon l'invention comporte un mobile 3, comportant une première denture 5 destiné à être entraîné en rotation par une source motrice telle qu'un barillet. Dans l'espèce, le mobile 3 est un mobile d'échappement 3 comportant un pignon d'échappement 5 ainsi qu'une roue d'échappement 7 destinée à interagir avec une ancre 8 associée à un balancier-spiral 25 de manière connue. Dans un autre contexte, le mobile 3 peut être un mobile de quantième, mobile de secondes (ou un autre mobile d'un rouage de finissage), mobile de secondes de chronographe, mobile dont la position est représentative de la réserve de marche d'un barillet, ou n'importe quel autre mobile qui convient pour l'affichage désiré.

Le mobile 3 comporte également une deuxième denture 9 qui est agencée pour entraîner un organe d'affichage 11 de n'importe quelle forme, qui sera décrit plus en détails ci-dessous, mais illustré ici en tant qu'aiguille 11 située à l'extrémité d'une tige 13 soutenue sur un élément de la montre par un palier 15. L'autre extrémité de la tige 13 porte un premier pignon 17 solidaire en rotation de la tige 13 et engrenant avec la deuxième denture 9. D'autres formes d'organes d'affichage 11 sont également possibles, par exemple des disques, un marquage sur une roue ou un pignon engrenant avec la seconde denture, etc. L'aiguille 11 illustrée présente une longueur comprise entre 1 mm et 1,5 mm, et peut être mieux vue par l'utilisateur à l'aide d'un dispositif optique tel qu'une loupe intégrée dans la pièce d'horlogerie, comme par exemple celle de la pièce "Art Piece 1" de Greubel Forsey.

La deuxième denture 9 permet d'obtenir l'effet qui forme le cœur de l'invention. Le module de sa denture, c'est-à-dire le pas des dents mesuré sur son cercle primitif pour un engrenage donné, est inférieur à 0,05 mm, de préférence égal ou inférieur à 0,035 mm, encore de préférence égal ou inférieur à 0,025 mm, encore de préférence égal ou inférieur à 0,015 mm.

De telles dentures présentant de tels modules ne sont pas typiquement fabricables par des techniques conventionnelles d'usinage, et nécessitent donc une fabrication par un procédé de micro-usinage (gravage d'une ou plusieurs plaque(s) de matériel, technique LIGA, fabrication additive à haute résolution), qui sera discuté plus en détails ci-dessous.

La deuxième denture 9 peut prendre n'importe quelle forme, par exemple celle d'une denture classique ou conique s'étendant radialement, une denture de chant droite ou conique, une denture hélicoïdale etc.

Dans l'exemple illustré, la deuxième denture 9 est une denture de chant conique, fabricable au moyen de fabrication additive à haute résolution en métal, époxy ou céramique. "Fabrication additive" est le terme général pour l'ensemble des procédures de fabrication au moyen d'addition de matériel, plus particulièrement l'impression 3D, notamment la photolithographie 3D mais d'autres procédés connus peuvent également être utilisés. Il est possible actuellement de fabriquer des pièces avec une précision de 1µM ou moins, ce qui permet de fabriquer des dentures présentant les modules nécessaires pour mettre en œuvre l'invention. Pour une denture plate conventionnelle, des techniques de micro-usinage (masquage et gravage d'une plaque, déposition etc.) bien connus sont applicables en tant qu'alternatives à l'impression 3D. Il est également envisageable pour le futur que des procédés de micro-usinage, notamment par masquage et gravure, se développeront jusqu'au point qu'il sera possible d'usiner des formes plus complexes telles que des dentures de chant en matériau à base de silicium (silicium monocristallin, polycristallin ou amorphe, son oxyde, carbure ou nitrure), à base de diamant, d'alumine etc.

Un avantage particulier de l'utilisation d'une impression 3D en époxy ou autre matière polymère est une réduction de l'inertie par rapport à la même structure faite en métal, ce qui minimise l'augmentation de l'inertie par rapport à un mobile 3 standard. Néanmoins, l'utilisation de métal, céramique ou autre matériau est également possible.

Par ailleurs, la matière polymère est typiquement plus flexible que le métal, ce qui fournit plus de marge dans le positionnement respectif des éléments. En effet, si les éléments peuvent se déformer légèrement, la tolérance de positionnement peut être plus généreuse. Un métal à faible coefficient de Young présente le même effet.

Dans le mode de réalisation illustré sur les figures, l'organe d'affichage est une aiguille 11 située à l'extrémité d'une tige 13 soutenue sur un élément de la montre par un palier 15. L'autre extrémité de la tige 13 porte un premier pignon 17 solidaire en rotation de la tige et engrenant avec la deuxième denture 9. D'autres formes d'organes d'affichage 11 sont également possibles, par exemple des disques, un marquage sur une roue ou sur un pignon engrenant avec la seconde denture etc. L'aiguille 11 illustrée présente une longueur comprise entre 1 mm et 1,5 mm, et peut par exemple mieux être mieux vue par l'intermédiaire d'une loupe intégrée dans la pièce d'horlogerie, comme par exemple celle comprise dans la pièce "Art Piece 1" de Greubel Forsey.

Bien que l'engrenage entre la deuxième denture 9 et le premier pignon 17 suffît pour entraîner l'aiguille 11, au vu de la petite taille de l'engrenage et la vitesse de rotation de l'aiguille 11, le système 1 comprend des moyens pour éliminer le chevrotement de l'aiguille qui résultera dans le cas d'un entraînement simple. Dans d'autres applications tel qu'un quantième ou un affichage de la réserve de marche, un chevrotement ne nuit pas nécessairement à l'appréciation de l'affichage par l'utilisateur, et donc un engrenage simple entre la deuxième denture 9 et le pignon 17 pourrait convenir selon le cas.

Afin d'éliminer le chevrotement susmentionné, les solutions conventionnelles utilisées dans des mécanismes de taille conventionnelle ne conviennent pas. En effet, l'utilisation d'une friction est contre-indiquée, car elle augmente la consommation d'énergie du système. Par ailleurs, l'utilisation de dents flexibles dans l'engrenage entre la deuxième denture 9 et le pignon 17 n'est pas facile, voire est impossible, à réaliser à cause de la petite taille des dents.

La solution appliquée dans le mode de réalisation illustré pour rattraper le jeu est décrite par la suite.

Une troisième denture 19 est prévue sur le mobile 3, coaxiale à la deuxième denture 9, ces deux roues comportant le même nombre de dents (60 dans ce cas), ce qui est mieux visible sur la figure 2. Les dents de chacune des dentures 9, 19 sont mutuellement solidaires en rotation et sont alignées, mais peuvent également être décalées angulairement l'une par rapport à l'autre.

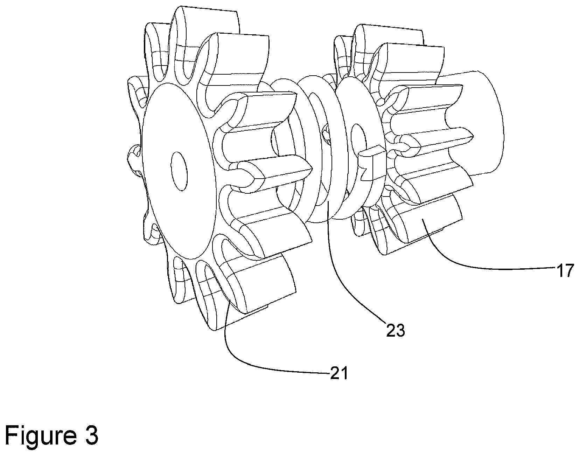

Comme visible sur la figure 3, le premier pignon 17, mentionné ci-dessus, est lié à un second pignon 21 par l'intermédiaire d'un élément élastique 23, ici illustré en tant que ressort hélicoïdal, mais d'autres formes et moyens sont également possibles. Le second pignon 21 est monté fou sur la tige 13, et, lors de l'assemblage du système, il est décalé angulairement, par exemple en étant pivoté d'au moins un pas de denture, par rapport au premier pignon 17 afin de précontraindre l'élément élastique 23 dans l'un sens ou dans l'autre. Ce faisant, le second pignon 21 fait office de pignon tendeur et le premier pignon 17 est contraint de pivoter afin de s'appuyer contre un flanc d'une dent de la deuxième denture 9, rattrapant ainsi tout jeu et évitant par conséquent le chevrotement qui peut arriver lorsque le premier pignon 17 est libre à "flotter". Dans le cas où les deux dentures 9, 19 ne sont pas alignées, un décalage de moins d'un pas de denture entre les deux pignons 19, 21 est également envisageable, la constante de rappel de l'élément élastique étant adaptée en conséquence.

Pour un régulateur 25 qui bat à 28'800 alternances par heure, le mobile d'échappement 3 illustré, dont la roue d'échappement 7 comporte 20 dents, effectue un tour en 5 secondes. La deuxième 9 et la troisième 19 dentures comportent chacune 60 dents, et les deux pignons 17, 21 comportent chacun 12 dents, et par conséquent l'organe d'affichage effectue 1 tour par seconde selon des pas de 1/8 tour par alternance. Une précision de lecture de 1/8 de seconde est ainsi possible.

Dans le mode de réalisation illustré, les deuxièmes 9 et troisièmes 19 dentures sont fabriquées en époxy de façon monobloc, et, en combinaison avec l'organe d'affichage 11, la tige 13, les pignons 17, 21 ainsi que l'élément élastique 23, ne représentent qu'une augmentation relative d'inertie de 1,03 en comparaison avec le mobile d'échappement "nu", et de la même façon n'impliquent qu'une augmentation de couple relatif de 1,118. Par rapport à un système de foudroyante "classique" de taille conventionnelle, l'inertie de ces éléments est 11'000 fois plus faible, et le couple nécessaire pour les entraîner est 6,8 fois moins élevé.

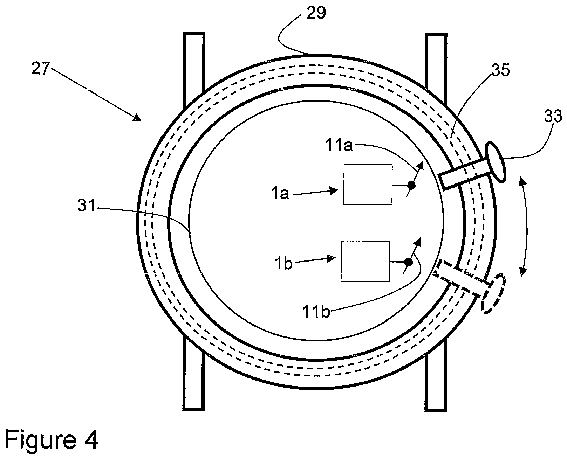

La figure 4 illustre en forme schématique simplifiée une pièce d'horlogerie 27 comprenant un boîtier dont seule la carrure 29 a été représentée. À l'intérieur de ce boîtier est logé un mouvement horloger 31, auquel sont associés deux systèmes d'affichage 1a, 1b selon l'invention, chacun étant pourvu d'un organe d'affichage 11a, 11b respectif. Tandis qu'on pourrait disposer les deux organes d'affichage 11a, 11b pour qu'ils puissent être visualisés par un dispositif optique 33 unique, tel qu'une loupe, disposée dans la carrure 29 ou dans un autre élément du boîtier, ou de prévoir deux dispositifs optiques 33 individuels pour visualiser chaque organe d'affichage 11a, 11b individuellement, le mode de réalisation de cette figure prévoit un dispositif optique 33 unique porté par une bague rotative 35. Cette dernière est disposée dans la carrure 29 de telle sorte que l'utilisateur puisse la pivoter afin de déplacer le dispositif optique pour être en face de l'un ou l'autre des organes d'affichage 11 afin de visualiser l'organe d'affichage 11a, 11b correspondant.

Bien qu'une bague rotative 35 présente des avantages au niveau d'une certaine simplicité dans la provision de joints d'étanchéité, d'autres solutions sont également possibles. Par exemple, le dispositif optique 33 peut être porté par un coulisseau droit ou courbé qui se déplace le long d'une coulisse correspondante. Autrement, le dispositif optique 33 peut être monté dans le boîtier par l'intermédiaire d'une charnière qui permette de le faire pivoter autour d'un axe de rotation passant par la carrure.

Il est également possible d'envisager de prévoir le dispositif optique 33 dans un autre élément de l'habillage de la pièce d'horlogerie 27, tel qu'une lunette tournante ou qu'un fond tournant, les organes d'affichage 11a, 11b étant disposés d'une manière appropriée correspondante.

Encore alternativement, afin de pouvoir visualiser plusieurs systèmes d'affichage 1 situés côte à côte dans une seule pièce d'horlogerie, il est possible de prévoir une loupe en forme de barre montée rigidement dans une paroi d'un élément de la pièce d'horlogerie en tant qu'élément d'habillage, qui permettrait ainsi de les visualiser tous en même temps. Une telle solution se prête particulièrement à un boîtier comportant au moins une paroi droite.

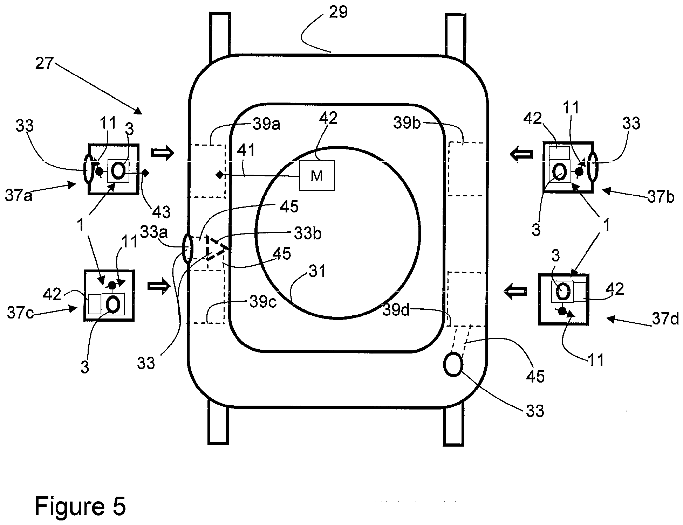

La figure 5 illustre de manière schématique simplifiée une autre variante d'une pièce d'horlogerie 27 comprenant un boîtier dont seule la carrure 29 a été représentée. Cette figure représente à la fois plusieurs variantes d'approches modulaires pour l'implémentation d'un dispositif d'affichage 1 selon l'invention dans une pièce d'horlogerie 27, qui peuvent être implémentées individuellement ou dans n'importe quelle combinaison.

Dans la première variante, le dispositif d'affichage 1, y compris son mobile 3 est prévu dans un module 37a amovible comportant un châssis à l'intérieur duquel sont logés des composants du dispositif d'affichage 1, le module 37a étant destiné à prendre place au moins partiellement dans un logement 39a correspondant aménagé dans la carrure. Des moyens de rétention (non illustrés) peuvent être prévus pour retenir le module 37a dans son logement 39a. Ce dernier aspect s'applique également pour tous les autres modules 37b, 37c, 37d.

Dans cette variante, la source motrice est intégrée au mouvement 31 et y fait partie. Afin de transmettre la force motrice d'une source motrice 42 - faisant partie du mouvement 31 - au module 37a, une première prise de force 41, tel qu'un axe de transmission, un arbre ou similaire, est prévu, qui débouche dans le logement 39a. Afin d'assurer l'étanchéité de la pièce d'horlogerie 27, des joints d'étanchéité (non illustrés) peuvent être prévus pour rendre étanche le passage de la prise de force 41 au travers de la paroi du logement 37a.

Le module 37a comprend une seconde prise de force 43 adaptée pour interagir avec la première prise de force 41, afin de commander l'organe d'affichage 11 situé dans le module 37a. La force peut être transmise en rotation ou même en translation axiale ou au moyen d'un levier basculant qui pivote autour d'un axe de pivotement afin d'agir sur le système 1 situé dans le module 37a. L'accouplement détachable entre les deux prises de forces 41, 43 est représenté schématiquement au moyen des diamants sur la figure 5.

Par ailleurs, un dispositif optique 33 peut être intégré dans le boîtier du module 37a afin de permettre à l'utilisateur de visualiser l'organe d'affichage.

Le module 37b diffère du module 37a en ce qu'il est indépendant du mouvement, et contient sa propre source motrice 42. Son logement 37b n'est donc qu'un creux simple prévu dans la carrure 29, sans communication avec le mouvement 31.

Le module 37c est également indépendant du mouvement, mais est dépourvu de dispositif optique 33. Dans cette variante, le dispositif optique 33 est ménagé dans la carrure 29. Ce dispositif optique 33 comprend une loupe 33a se situant dans la paroi latérale extérieure de la carrure 29, adjacent à un passage optique 45 menant à l'intérieur du logement 39c via un prisme ou miroir 33b qui permet de visualiser l'organe d'affichage 11 correspondant, qui est visible au travers d'une ouverture ou d'une fenêtre (non illustrée) prévue dans la paroi du module 37c. Le passage optique 45 peut simplement être un ou plusieurs vides, ou peut être un guide d'onde quelconque tel qu'un prisme en matière transparente (par exemple en verre, en quartz, en résine acrylique ou similaire).

Le module 37d est substantiellement similaire au module 37c, mais est adapté pour utilisation avec une différente variante d'un dispositif optique 33. Ce dispositif optique comprend une loupe agencée dans la face supérieure de la carrure 29. S'il n'est pas possible d'agencer la loupe directement en face de l'organe d'affichage 11 lorsque le module est en position insérée, un prisme ou un miroir peut être prévu dans le passage optique 45 comme dans le cas du module 37c.

Les caractéristiques des divers modules 37a, 37b, 37c, 37d peuvent être combinées dans des manières qui font du sens technique. En particulier, les modules 37c et 37d peuvent être pourvus d'un lien cinématique avec le mouvement comme appliqué dans le module 37a.

D'autres modifications sont encore possibles. Dans le cas des modules 37c et 37d, on pourrait utiliser des fibres optiques en tant que passages optiques 45 afin d'éviter d'utiliser des prismes ou des miroirs, et afin de pouvoir délocaliser la loupe de l'affichage correspondant et d'ainsi pouvoir positionner les loupes n'importe où dans la carrure 29.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention comme définie par les revendications. Par exemple, le dispositif optique 33 peut se trouver à l'intérieur de la boîte de montre, visible au travers une partie transparente standard et déjà étanche, comme par exemple la glace. Encore alternativement, le dispositif optique 33 peut se trouver à l'extérieur de la partie étanche de la boite de montre, en étant positionné pour visualiser l'organe d'affichage 11 au travers de la glace, d'une fenêtre ou similaire. Ces variantes évitent de devoir prévoir des joints d'étanchéité supplémentaires au niveau du dispositif optique 33. Par ailleurs, les dentures 5, 9 et les rouages du système d'affichage 1 peuvent être à plat, c'est-à-dire parallèle au plan du mouvement, verticaux, c'est-à-dire perpendiculaires au plan du mouvement, ou inclinés à un autre angle au plan du mouvement.

## Revendications

1. Système d'affichage (1) pour pièce d'horlogerie (27), ledit système (1) comprenant un mobile (3) agencé pour être entraîné par une source motrice par l'intermédiaire d'une première denture (5) que comporte ledit mobile (3), ledit mobile (3) comportant au moins une deuxième denture (9) présentant un module de denture inférieur à 0,05 mm, ladite deuxième denture (9) étant agencée pour entraîner directement ou indirectement un organe d'affichage (11), **caractérisé en ce que** ledit mobile (3) est un mobile d'échappement.

2. Système (1) selon l'une des revendications précédentes, dans lequel ladite deuxième denture (9) est à chant.

3. Système (1) selon l'une des revendications précédentes, dans lequel ladite deuxième denture (9) est conique.

4. Système (1) selon l'une des revendications précédentes, dans lequel ledit mobile comporte une troisième denture (19) présentant un module de denture inférieur à 0,05 mm, l'organe d'affichage (11) étant entraîné par l'intermédiaire d'une paire de pignons (17, 21) liés entre eux par un élément élastique (23), l'un de ces pignons (17) engrenant avec ladite deuxième denture (9), l'autre (21) avec ladite troisième denture (19), l'élément élastique (23) étant précontraint.

5. Système (1) selon la revendication 4, dans lequel ladite deuxième denture (9) est venue d'une pièce avec ladite troisième denture (19).

6. Pièce d'horlogerie (27) comprenant un système (1) selon l'une des revendications précédentes, ladite pièce d'horlogerie (27) comportant un dispositif optique (33) agencé pour pouvoir visualiser ledit organe d'affichage (11; 11a; 11b).

7. Pièce d'horlogerie (27) selon la revendication 6, comportant une pluralité desdits systèmes (1a, 1b), ledit dispositif optique (33) étant agencé pour être déplaçable par rapport à une carrure (29) que comporte ladite pièce d'horlogerie (27) afin de visualiser l'organe d'affichage (11a, 11b) d'au moins deux desdits systèmes (1a, 1b).

8. Pièce d'horlogerie (27) selon la revendication précédente, dans laquelle ledit dispositif optique (33) est monté dans :
- une bague rotative (35) prévue dans ladite carrure (29) ; ou
- un coulisseau monté dans une coulisse prévue dans ladite carrure (29) ; ou
- une lunette tournante montée sur ladite carrure (29) ; ou
- un fond ou une partie de fond tournant(e) monté(e) sur ladite carrure (29).

9. Pièce d'horlogerie (27) comprenant un mouvement horloger (31) et un système (1) selon l'une des revendications 1 à 6, ledit système (1) se situant dans un module amovible (37a, 37b, 37c, 37d) agencé pour prendre place au moins partiellement dans un logement que comporte ladite pièce d'horlogerie.

10. Pièce d'horlogerie (27) selon la revendication précédente, dans laquelle ladite source motrice fait partie dudit mouvement (31) et ledit mobile (3) se situe dans ledit module amovible (37a), ladite source motrice étant en liaison cinématique avec ledit mobile (3) lorsque ledit module amovible (37a) se trouve dans ledit logement (39a).

11. Pièce d'horlogerie (27) selon la revendication 9, dans laquelle ladite source motrice est intégrée audit module amovible (37b, 37c, 37d).

12. Procédé de fabrication d'un système (1) selon l'une des revendications 1 à 5, dans lequel au moins ladite deuxième denture (9) est obtenue par l'intermédiaire d'un procédé de fabrication additive.

## Patentansprüche

1. Anzeigesystem (1) für eine Uhr (27), wobei das System (1) ein Drehteil (3) umfasst, das angeordnet ist, um mit Hilfe einer ersten Verzahnung (5), die Teil des Drehteils (3) ist, durch eine Antriebsquelle angetrieben zu werden, wobei das Drehteil (3) mindestens eine zweite Verzahnung (9) umfasst, die einen Verzahnungsmodul kleiner als 0,05 mm aufweist, wobei die zweite Verzahnung (9) angeordnet ist, um ein Anzeigeorgan (11) direkt oder indirekt anzutreiben, **dadurch gekennzeichnet, dass** das Drehteil (3) ein Hemmungsrad ist.

2. System (1) nach einem der vorhergehenden Ansprüche, wobei die zweite Verzahnung (9) eine Seitenzahnung ist.

3. System (1) nach einem der vorhergehenden Ansprüche, wobei die zweite Verzahnung (9) konisch ist.

4. System (1) nach einem der vorhergehenden Ansprüche, wobei das Drehteil eine dritte Verzahnung (19) umfasst, die einen Verzahnungsmodul kleiner als 0,05 mm aufweist, wobei das Anzeigeorgan (11) mit Hilfe eines Paares von Ritzeln (17, 21) angetrieben wird, die durch ein Federelement (23) miteinander verbunden sind, wobei das eine dieser Ritzel (17) mit der zweiten Verzahnung (9), das andere (21) mit der dritten Verzahnung (19) in Eingriff steht, wobei das Federelement (23) vorgespannt ist.

5. System (1) nach Anspruch 4, wobei die zweite Verzahnung (9) einstückig mit der dritten Verzahnung (19) gebildet ist.

6. Uhr (27), die ein System (1) nach einem der vorhergehenden Ansprüche umfasst, wobei die Uhr (27) eine optische Vorrichtung (33) umfasst, die angeordnet ist, um das Anzeigeorgan (11; 11a; 11b) visualisieren zu können.

7. Uhr (27) nach Anspruch 6, die eine Vielzahl der Systeme (1a, 1b) umfasst, wobei die optische Vorrichtung (33) angeordnet ist, um in Bezug auf ein Gestell (29), das Teil der Uhr (27) ist, bewegbar zu sein, um das Anzeigeorgan (11a, 11b) von mindestens zwei der Systeme (1a, 1b) zu visualisieren.

8. Uhr (27) nach dem vorhergehenden Anspruch, wobei die optische Vorrichtung (33) in einem der folgenden montiert ist:
- einem Drehring (35), der in dem Gestell (29) vorgesehen ist; oder
- einem Gleitelement, das in einer in dem Gestell (29) vorgesehenen Führung montiert ist; oder
- einer drehbaren Lünette, die auf dem Gestell (29) montiert ist; oder
- einem drehbaren Boden oder Bodenabschnitt, der auf dem Gestell (29) montiert ist.

9. Uhr (27), die ein Uhrwerk (31) und ein System (1) nach einem der Ansprüche 1 bis 6 umfasst, wobei sich das System (1) in einem entfernbaren Modul (37a, 37b, 37c, 37d) befindet, das angeordnet ist, um mindestens teilweise in einer Aufnahme, die Teil der Uhr ist, Platz zu finden.

10. Uhr (27) nach dem vorhergehenden Anspruch, wobei die Antriebsquelle Teil des Werks (31) ist und sich das Drehteil (3) in dem entfernbaren Modul (37a) befindet, wobei die Antriebsquelle mit dem Drehteil (3) in kinematischer Verbindung steht, wenn sich das entfernbare Modul (37a) in der Aufnahme (39a) befindet.

11. Uhr (27) nach Anspruch 9, wobei die Antriebsquelle in das entfernbare Modul (37b, 37c, 37d) integriert ist.

12. Verfahren zur Fertigung eines Systems (1) nach einem der Ansprüche 1 bis 5, wobei mindestens die zweite Verzahnung (9) mit Hilfe eines additiven Fertigungsverfahrens hergestellt wird.

## Claims

1. Display system (1) for a timepiece (27) said system (1) comprising a wheel (3) arranged to be driven by a motive source via a first toothing (5) that said wheel (3) comprises, said wheel (3) comprising at least one second toothing (9) having a toothing modulus less than 0.05 mm, said second toothing (9) to be arranged to directly or indirectly drive a display member (11), **characterized in that** said wheel (3) is an escapement wheel.

2. System (1) according to one of the preceding claims, wherein said second toothing (9) is contrate.

3. System (1) according to one of the preceding claims, wherein said second toothing (9) is conical.

4. System (1) according to one of the preceding claims, wherein said wheel comprises a third toothing (19) having a toothing modulus less than 0.05 mm, the display member (11) being driven via a pair of pinions (17, 21) linked to one another by an elastic element (23), one of these pinions (17) meshing with said second toothing (9), the other (21) meshing with said third toothing (19), the elastic element (23) being prestressed.

5. System (1) according to Claim 4, wherein said second toothing (9) is monobloc with said third toothing (19) .

6. Timepiece (27) comprising a system (1) according to one of the preceding claims, said timepiece (27) comprising an optical device (33) arranged to permit viewing of said display member (11; 11a; 11b).

7. Timepiece (27) according to Claim 6, comprising a plurality of said systems (1a, 1b), said optical device (33) being arranged to be displaceable relative to a middle (29) that said timepiece (27) comprises in order to view the display member (11a, 11b) of at least two of said systems (1a, 1b).

8. Timepiece (27) according to the preceding claim, wherein said optical device (33) is mounted in:
- a rotary ring (35) provided in said middle (29); or
- a slide mounted in a slide-way provided in said middle (29); or
- a rotating bezel mounted in said middle (29); or
- a rotating bottom or part of bottom mounted on said middle (29).

9. Timepiece (27) comprising a timepiece movement (31) and a system (1) according to one of Claims 1 to 6, said system (1) being situated in a removable module (37a, 37b, 37c, 37d) arranged to sit at least partially in a housing that said timepiece comprises.

10. Timepiece (27) according to the preceding claim, wherein said motive source forms part of said movement (31) and said wheel (3) is situated in said removable module (37a), said motive source being kinematically linked with said wheel (3) when said removable module (37a) is in said housing (39a).

11. Timepiece (27) according to Claim 9, wherein said motive source is integrated in said removable module (37b, 37c, 37d).

12. Method for manufacturing a system (1) according to one of Claims 1 to 5, wherein at least said second toothing (9) is obtained via an additive manufacturing method.
